# EUROPEAN PATENT SPECIFICATION

(11) **EP 4 548 215 B1**
(45) Date of publication and mention of the grant of the patent: **05.08.2026**
(21) Application number: 23733899.1
(22) Date of filing: 14.06.2023
(51) Int. Cl.: G06F 11/3668

(54) **METHOD FOR GENERATING A FUZZING HARNESS**
VERFAHREN ZUR ERZEUGUNG EINES FUZZING-GURTES
PROCÉDÉ DE GÉNÉRATION D'UN FAISCEAU DE FUSION

(30) Priority: 29.06.2022 DE 102022116237
(43) Date of publication of application: 07.05.2025
(73) Proprietor: AUMOVIO Germany GmbH, 60488 Frankfurt am Main (DE); Nanyang Technological University, Singapore 639798 (SG)
(72) Inventor: XIONG, Siyang, Singapore 339780 (SG); LI, Yuekang, Singapore 639798 (SG); ZHANG, Cen, Singapore 639798 (SG); LIU, Chaoyi, Singapore 339780 (SG)
(74) Representative: Maiwald GmbH
(86) International application number: PCT/EP2023/066022
(87) International publication number: WO 2024/002704

(56) References cited:
- BABIC DOMAGOJ DBABIC@GOOGLE COM ET AL: "FUDGE: fuzz driver generation at scale", PROCEEDINGS OF THE 2019 27TH ACM JOINT MEETING ON EUROPEAN SOFTWARE ENGINEERING CONFERENCE AND SYMPOSIUM ON THE FOUNDATIONS OF SOFTWARE ENGINEERING, ACMPUB27, NEW YORK, NY, USA, 12 August 2019 (2019-08-12), pages 975 - 985, XP058458785, ISBN: 978-1-4503-5572-8, DOI: 10.1145/3338906.3340456
- CHALUPA MAREK ED - SHIVAKUMARA PALAIAHNAKOTE ET AL: "DG: Analysis and Slicing of Bitcode", 12 October 2020, 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 557 - 563, pages: 557 - 562, XP047566370
- ISPOGLOU KYRIAKOS K ET AL: "FuzzGen: Automatic Fuzzer Generation", OPEN ACCESS TO THE PROCEEDINGS OF THE 29TH USENIX SECURITY SYMPOSIUM IS SPONSORED BY USENIX., 14 August 2020 (2020-08-14), pages 2271 - 2287, XP093078876, Retrieved from the Internet <URL:https://www.usenix.org/system/files/sec20-ispoglou.pdf> [retrieved on 20230905]

## Description

### TECHNICAL FIELD

The invention relates to a method for generating a fuzzing harness using a sample program that calls a target function to be fuzzed. The invention further relates to a computer program that, when executed by a computer, causes the computer to generate a fuzzing harness.

### BACKGROUND

Software analysis is an important task in the development of automotive software due to the automotive industry's high standard of ensuring software quality for its safety-critical mission. In addition to the safety requirement, the recent introduction of security compliance requirements in automotive software also demands automotive software to be thoroughly analyzed to remove potential security vulnerabilities.

Software analysis has been introduced into the software development process since a long time ago and software analysts keep improving the effectiveness and efficiency of the analysis process. Among categories of software analyses, dynamic analysis is gaining popularity in the software community. Instrumented fuzzing is one of the methods in dynamic analysis. Instrumented fuzzing has a fuzzing engine which generates random inputs to the software to be fuzzed, trying to reveal the vulnerability in the software. To adopt instrumented fuzzing as a software analysis methodology, one needs to create a fuzzing harness which connects the fuzzing engine to the fuzz target. Software developers or testers with little fuzz testing background need considerable amount of ramp-up effort to understand how to write the fuzzing harness. Hence, an automation of the harness generation is needed to reduce such ramp-up effort.

In particular, a fuzzing harness is a test case or a particular test target. It is an "entry point executable" to the fuzz target and connects random inputs from an input generation engine to the fuzz target. When a tester wants to pass the random data to a specific part of the fuzz target, he or she needs to create the fuzzing harness. In other words, the fuzzing harness can decide the analysis coverage, i.e., enabling the random input to reach every part of the fuzz target.

For example, if one wants to assess the security of the server application in a client-server architecture, he or she needs a testing harness to perform various setup tasks, like starting the server process prior to sending network input (i.e., the random input) from a client connection. Another example would be testing a Dynamically Loaded Library (DLL). Since the DLL cannot run independently on its own, one would need to write a fuzzing harness, in this case an executable program using the DLL that passes input from a command line into DLL functions.

To prepare a fuzzing harness, the source code of the fuzz target has to be retrieved from a software version control system. Further, a sample program, or a consumer program, which uses the fuzz target has to be retrieved. Then it has to be examined how the fuzz target is used in the sample program, the outcome of which is called the trace information. Creating trace information could be done via either dynamic tracing, e.g., function execution trace via running the program, or static tracing, e.g., function call trace via scanning the source code. Then, the trace information is used to create the test harness. The tasks include getting the calling trace information of the target function, parsing the target function, and creating a test logic out of the information collected. The above procedure can be tedious and time-consuming if all is done manually. An alternative is semiautomatically converting the trace information to the test logic, wherein a user needs to select the suitable harness out of the given choices from the generation from a tool.

An example of automated test logic generation in fuzzing is given in the article "FUDGE: Fuzz Driver Generation at Scale" by D. Bucur et al. (https://doi.org/10.1145/3338906.3340456). Another example of automated fuzzer generation is given in the article "FuzzGen: Automatic Fuzzer Generation" by K. Ispoglou et al. (Proceeding of the 29th USENIX Security Symposium, 2020).

### SUMMARY

It is an object of the present invention to provide an improved method for generating a fuzzing harness. It is another object of the present invention to provide a computer program comprising instructions that, when executed by a computer, perform the improved method for generating a fuzzing harness.

The object of the present invention is solved by the subject-matter of the independent claims, wherein further embodiments are incorporated in the dependent claims.

According to an aspect of the invention, a method for generating a fuzzing harness is provided. In this context, fuzzing may also be referred to as robustness testing, fuzz testing or negative testing.

According to the method, a piece of software source code is provided. Said software source code comprises the source code for the software that is to be tested. From the software source code, a target function to be fuzzed is selected. Said selection of the target function may be performed manually, i.e., by a user. The selection of the target function may also be performed automatically, wherein out of the plurality of functions in the software source code, a target function may be chosen based on its occurrence in the source code or based on a date on which the target function is created.

Further, a sample program is selected from the software source code, wherein said sample program calls the target function. The sample program may be part of a test suite for the software, but it may also be a non-testing consumer program. If more than one sample programs can be identified that call the target function, the method may be repeated for more than one of said sample programs, or a sample program may be chosen, e.g., based on the size of the sample program, where a smaller sample program is to be preferred.

Once the target function and the sample program have been chosen, the sample program is compiled to generate bit code, e.g., with a file extension ".bc".

From said bit code, the target function is sliced. For the slicing, the desired target function is provided to the slicer. The result of said slicing is the fuzzing harness that may be used to test the target function. In slicing the target function from the bit code, parts of the bit code that are not related to the target function are removed, hence less computing resources such as memory and/or CPU time are needed.

With the presented method for generating the fuzzing harness, a quality of the generated fuzzing harness is ensured, since the method does not depend on the skill of a user. In addition, time is saved by applying the method, since the tedious work of generating a fuzzing harness is now automated. Finally, it is sufficient to let developers without special software analysis skills generate the fuzzing harness with the above method, hence highly-skilled developers are no longer needed for this task.

According to an embodiment, the software source code is source code of software for a vehicle, in particular a vehicle with an Advanced Driver Assistance System (ADAS), more particularly an autonomous vehicle. In these cases, accurately testing the software and removing bugs and vulnerabilities might save lives, since bugs in the ADAS or the autonomous vehicle may lead to, in the worst case, casualties in vehicle crashes.

According to an embodiment, after selecting the target function, external dependencies of the target function are identified. The external dependencies are functions that are used by the target function, and which are not of interest for the analysis. Slicing the target function is then further based on said external dependencies.

According to an embodiment, a dataflow of at least one of the external dependencies is modeled. That is, slicing may be performed by using said modeled dataflow instead of the external dependency itself. This enables a more precise and more effective slicing of the program.

According to an embodiment, at least one of the external dependencies is replaced by a stub implementation of the external dependency. In particular external dependencies that would require a large integration effort in order to include them may be replaced by a stub implementation. Slicing the target function from the bit code is then also dependent on the stub implementation.

According to an embodiment, the method further comprises identifying an entry point of the sample program that will lead to the call of the target function. This step is performed after selecting the sample program and before compiling the sample program. Compiling the sample program is then performed starting from said entry point. Hence, program code before the entry point, which does not affect the call of the target function, is already omitted in compiling the sample program, further saving computing resources.

According to an embodiment, the sample program is a multi-threaded program. In this case, identifying the entry point comprises identifying other functions in the multiple threads that need to be called before entering the entry point. Hence, for each of the threads, there may be a separate thread-specific entry point, and compiling the sample program may start from each of said thread-specific entry points for each of the threads.

According to an embodiment, the bit code is LLVM bit code, i.e., a virtual machine bit code. LLVM bit code is very versatile and well suited for generating fuzzing harnesses. In this case, the compiler wllvm may be used, in particular replacing the standard compiler for the sample program such as gcc or clang. As a slicer, the IIvm-slicer may be used. Also, for modeling the external dependencies, the functionModelAddUse API may be used.

According to an embodiment, the method further comprises reverting the fuzzing harness back to a source code file yielding a harness source. Hence, the harness source is the source code for the sliced program. In particular, the source code file is a human readable code, such as a c file. The harness source is then reviewed and modified, in particular by a user. Since during slicing, symbol information of the variables is not retained, symbols are presented by "var1", "var2", and so on in the reverted source code. Then the modified harness source is compiled to generate a modified fuzzing harness, which is improved compared to the original fuzzing harness.

According to an embodiment, the method further comprises fuzzing the target function using the fuzzing harness. That is, the target function is provided with random input data, via the fuzzing harness, and hence potential bugs in the target function may be detected. Once such a bug has been detected, it has to be further analyzed and then patched, which is usually done by experienced developers. As a result, the target function has fewer bugs, becomes more stable, more reliable and less prone to attacks.

According to another aspect of the present invention, a computer program product is provided. The computer program product comprises instructions which, when executed by a computer, causes the computer to perform the steps according to the above description. The technical advantages of said computer program product correspond to those of the method and are explained in detail above.

### BRIEF DESCRIPTION OF THE DRAWINGS

These and other aspects of the invention will be apparent from and elucidated further with reference to the embodiments described by way of examples in the following description and with reference to the accompanying drawings, in which
- Fig. 1: shows a flowchart of an embodiment of a method for generating a fuzzing harness;
- Fig. 2: shows a flowchart of another embodiment of a method for generating a fuzzing harness; and
- Fig. 3: shows a flowchart of yet another embodiment of a method for generating a fuzzing harness.

In the figures, elements which correspond to elements already described may have the same reference numerals. Examples, embodiments or optional features, whether indicated as non-limiting or not, are not to be understood as limiting the invention as claimed.

### DESCRIPTION OF EMBODIMENTS

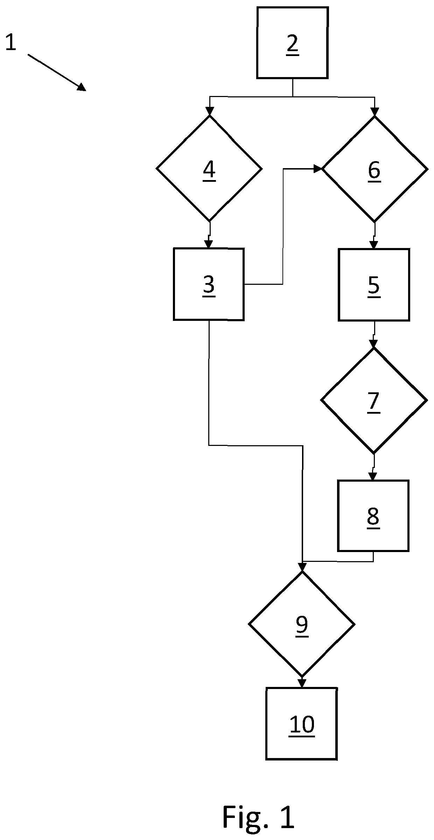

Figure 1 shows a flowchart of an embodiment of a method 1 for generating a fuzzing harness. According to the method 1, software source code 2 is provided. From said software source code 2, a target function 3 to be fuzzed is selected 4. Said selection may be performed manually or based on certain rules, e.g., target function 3 that are extensively used in the software source code 2 are selected first. Also, a sample program 5 that calls the target function 3 is selected 6 from the software source code 2. The sample program 5 is then compiled 7 to generate bit code 8. From the bit code 8, the target function 3 is sliced 9, to obtain the fuzzing harness 10.

With the method 1 for generating the fuzzing harness 10, a quality of the generated fuzzing harness 10 is ensured, since the method does not depend on the skill of a user. Also, time is saved by applying the method 1, since the tedious work of generating a fuzzing harness 10 is now automated. Finally, developers without special software analysis skills are sufficient to generate the fuzzing harness 10 with the above method 1, hence highly skilled developers are no longer needed for this task.

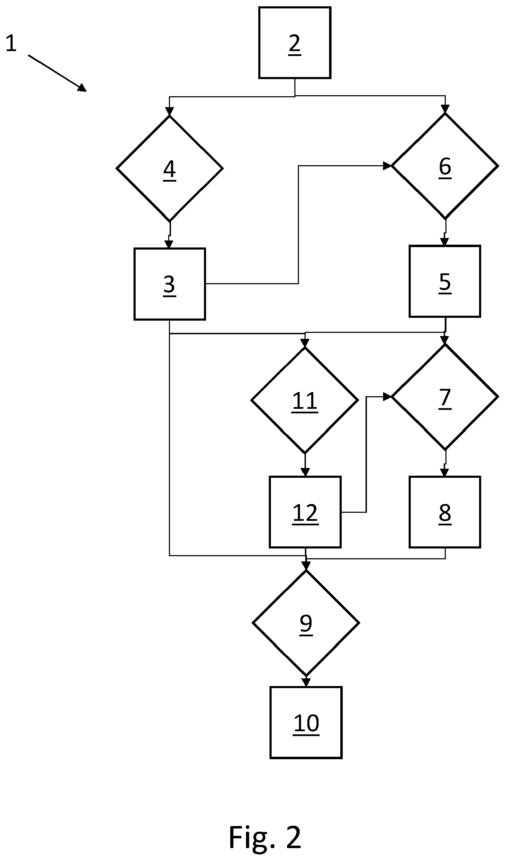

Figure 2 shows a flowchart of another embodiment of a method 1 for generating a fuzzing harness 10. In comparison with the method 1 of Figure 1, this method further comprises a step of identifying 11 external dependencies 12 of the target function 3. For said external dependencies 12, the dataflow may be modeled and/or the external dependencies 12 may be replaced by a stub implementation. In either case, the results will be used to generate the bit code 8 and to perform the slicing 9. As a result, the fuzzing harness 10 is smaller and requires less computing resources such as memory and/or CPU time.

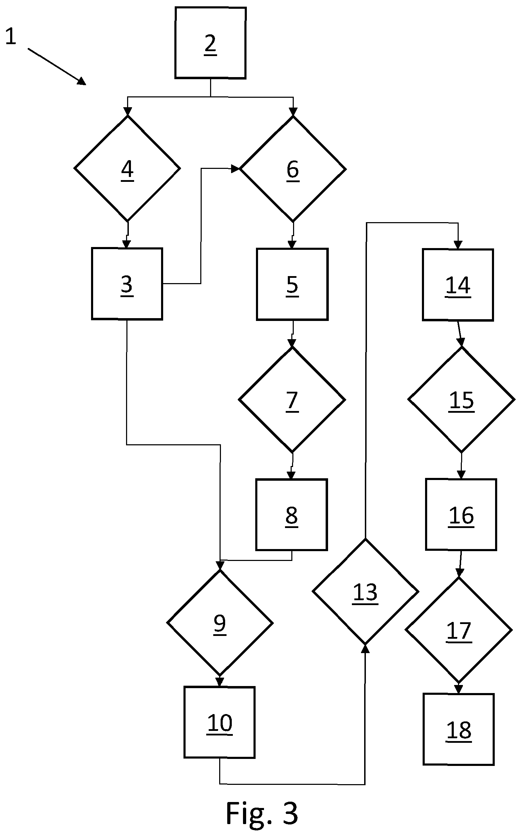

Figure 3 shows a flowchart of yet another embodiment of a method 1 for generating a fuzzing harness 10. In comparison with the method 1 of Figure 1, the fuzzing harness 10 is reverted 13 back to a source code file yielding a harness source 14. Said harness source 14 may then be review and modified 15, in particular by an experienced developer, to create a modified harness source 16. Finally, the modified harness source 16 is compiled 17 to generate a modified fuzzing harness 18, which is improved in comparison to the original fuzzing harness 10.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. Method (1) for generating a fuzzing harness (10), the method (1) comprising:
providing a piece of software source code (2);
selecting a target function (3) to be fuzzed from the software source code (2);
selecting a sample program (5) from the software source code (2) that calls the target function (3);
compiling the sample program (5) to generate bit code (8);
slicing the target function (3) from the bit code (8), based on the target function (3), to obtain the fuzzing harness (10).

2. Method (1) according to claim 1, wherein the software source code (2) is source code of software for a vehicle, in particular a vehicle with an advanced driver assistance system, more particularly an autonomous vehicle.

3. Method (1) according to claim 1 or 2, wherein after selecting the target function (3) and selecting the sample program (5), external dependencies (12) of the target function (3) are identified and slicing the target function (3) is further based on the external dependencies (12).

4. Method (1) according to claim 3, wherein a dataflow of at least one of the external dependencies (12) is modeled.

5. Method (1) according to claim 3 or 4, wherein at least one of the external dependencies (12) is replaced by a stub implementation of the external dependency (12).

6. Method (1) according to any of claims 1 to 5, wherein after selecting the sample program (5) and before compiling the sample program (5), the method (1) further comprises identifying an entry point of the sample program (5) that will lead to the call of the target function (3) and compiling the sample program (5) is performed starting from the entry point.

7. Method (1) according to claim 6, wherein the sample program (5) is a multi-threaded program and identifying the entry point comprises identifying other functions in the multiple threads to be called before entering the entry point.

8. Method (1) according to any of claims 1 to 7, wherein the bit code (8) is LLVM bit code.

9. Method (1) according to any of claims 1 to 8, wherein the method (1) further comprises
reverting the fuzzing harness (10) back to a source code file yielding a harness source (14);
reviewing and modifying the harness source (14); and
compiling the modified harness source (16) to generate a modified fuzzing harness (18).

10. Method (1) according to any of claims 1 to 9, wherein the method (1) further comprises fuzzing the target function (3) using the fuzzing harness (10).

11. Computer program product comprising instructions which, when the program is executed by a computer, cause the computer to perform the steps of the method (1) according to any of claims 1 to 10.

## Patentansprüche

1. Verfahren (1) zum Erzeugen eines Fuzzing-Harness (10), wobei das Verfahren (1) umfasst:
Bereitstellen eines Stücks Software-Quellcode (2);
Auswählen einer zu fuzzenden Zielfunktion (3) aus dem Software-Quellcode (2);
Auswählen eines Beispielprogramms (5) aus dem Software-Quellcode (2), das die Zielfunktion (3) aufruft;
Kompilieren des Beispielprogramms (5) zum Erzeugen von Bitcode (8);
Slicen der Zielfunktion (3) aus dem Bitcode (8), basierend auf der Zielfunktion (3), um den Fuzzing-Harness (10) zu erhalten.

2. Verfahren (1) nach Anspruch 1, wobei der Software-Quellcode (2) Quellcode von Software für ein Fahrzeug ist, insbesondere ein Fahrzeug mit einem fortgeschrittenen Fahrerassistenzsystem, ganz insbesondere ein autonomes Fahrzeug.

3. Verfahren (1) nach Anspruch 1 oder 2, wobei nach dem Auswählen der Zielfunktion (3) und dem Auswählen des Beispielprogramms (5) externe Abhängigkeiten (12) der Zielfunktion (3) identifiziert werden und das Slicen der Zielfunktion (3) ferner auf den externen Abhängigkeiten (12) basiert.

4. Verfahren (1) nach Anspruch 3, wobei ein Datenfluss von mindestens einer der externen Abhängigkeiten (12) modelliert wird.

5. Verfahren (1) nach Anspruch 3 oder 4, wobei mindestens eine der externen Abhängigkeiten (12) durch eine Stub-Implementierung der externen Abhängigkeit (12) ersetzt wird.

6. Verfahren (1) nach einem der Ansprüche 1 bis 5, wobei nach dem Auswählen des Beispielprogramms (5) und vor dem Kompilieren des Beispielprogramms (5) das Verfahren (1) ferner das Identifizieren eines Einstiegspunkts des Beispielprogramms (5) umfasst, der zum Aufruf der Zielfunktion (3) führt, und das Kompilieren des Beispielprogramms (5) ausgehend vom Einstiegspunkt durchgeführt wird.

7. Verfahren (1) nach Anspruch 6, wobei das Beispielprogramm (5) ein Multithread-Programm ist und das Identifizieren des Einstiegspunkts das Identifizieren anderer Funktionen in den mehreren Threads umfasst, die vor dem Eintreten in den Einstiegspunkt aufgerufen werden sollen.

8. Verfahren (1) nach einem der Ansprüche 1 bis 7, wobei der Bitcode (8) LLVM-Bitcode ist.

9. Verfahren (1) nach einem der Ansprüche 1 bis 8, wobei das Verfahren (1) ferner umfasst:
Zurückkonvertieren des Fuzzing-Harness (10) in eine Quellcodedatei, die eine Harness-Quelle (14) ergibt;
Überprüfen und Modifizieren der Harness-Quelle (14); und
Kompilieren der modifizierten Harness-Quelle (16) zum Erzeugen eines modifizierten Fuzzing-Harness (18).

10. Verfahren (1) nach einem der Ansprüche 1 bis 9, wobei das Verfahren (1) ferner das Fuzzen der Zielfunktion (3) unter Verwendung des Fuzzing-Harness (10) umfasst.

11. Computerprogrammprodukt, umfassend Anweisungen, die, wenn das Programm von einem Computer ausgeführt wird, den Computer veranlassen, die Schritte des Verfahrens (1) nach einem der Ansprüche 1 bis 10 auszuführen.

## Revendications

1. Procédé (1) permettant de générer un faisceau de tests à données aléatoires (10), le procédé (1) comprenant :
la fourniture d'un morceau de code source de logiciel (2) ;
la sélection d'une fonction cible (3) à tester à partir du code source de logiciel (2) ;
la sélection d'un programme échantillon (5) à partir du code source de logiciel (2) qui appelle la fonction cible (3) ;
la compilation du programme échantillon (5) pour générer un code binaire (8) ;
la découpe de la fonction cible (3) à partir du code binaire (8), sur la base de la fonction cible (3), pour obtenir le faisceau de tests à données aléatoires (10).

2. Procédé (1) selon la revendication 1, dans lequel le code source de logiciel (2) est un code source d'un logiciel pour un véhicule, en particulier un véhicule doté d'un système avancé d'aide à la conduite, plus particulièrement un véhicule autonome.

3. Procédé (1) selon la revendication 1 ou 2, dans lequel après la sélection de la fonction cible (3) et la sélection du programme échantillon (5), des dépendances externes (12) de la fonction cible (3) sont identifiées et le découpage de la fonction cible (3) est en outre basé sur les dépendances externes (12).

4. Procédé (1) selon la revendication 3, dans lequel un flux de données d'au moins une des dépendances externes (12) est modélisé.

5. Procédé (1) selon la revendication 3 ou 4, dans lequel au moins une des dépendances externes (12) est remplacée par une implémentation stub de la dépendance externe (12).

6. Procédé (1) selon l'une quelconque des revendications 1 à 5, dans lequel après la sélection du programme échantillon (5) et avant de compiler le programme échantillon (5), le procédé (1) comprend en outre l'identification d'un point d'entrée du programme échantillon (5) qui conduira à l'appel de la fonction cible (3) et la compilation du programme échantillon (5) est effectuée à partir du point d'entrée.

7. Procédé (1) selon la revendication 6, dans lequel le programme échantillon (5) est un programme multithread et l'identification du point d'entrée comprend l'identification d'autres fonctions dans les multiples threads à appeler avant d'entrer dans le point d'entrée.

8. Procédé (1) selon l'une quelconque des revendications 1 à 7, dans lequel le code binaire (8) est un code binaire LLVM.

9. Procédé (1) selon l'une quelconque des revendications 1 à 8, dans lequel le procédé (1) comprend en outre :
le fait de ramener le faisceau de tests à données aléatoires (10) à un fichier de code source donnant une source de faisceau (14) ;
l'examen et la modification de la source de faisceau (14) ; et
la compilation de la source de faisceau modifiée (16) pour générer un faisceau de tests à données aléatoires modifié (18).

10. Procédé (1) selon l'une quelconque des revendications 1 à 9, dans lequel le procédé (1) comprend en outre le test à données aléatoires de la fonction cible (3) à l'aide du faisceau de tests à données aléatoires (10).

11. Produit programme informatique comprenant des instructions qui, lorsque le programme est exécuté par un ordinateur, amènent l'ordinateur à mettre en œuvre les étapes du procédé (1) selon l'une quelconque des revendications 1 à 10.
